# EUROPEAN PATENT APPLICATION

(11) **EP 4 831 724 A1**
(43) Date of publication of application: **28.10.2026**
(21) Application number: 24907183.8
(22) Date of filing: 05.12.2024
(51) Int. Cl.: G02C 7/06

(54) **PROGRESSIVE POWER LENS AND METHOD FOR DESIGNING PROGRESSIVE POWER LENS**

(30) Priority: 20.12.2023 JP 2023214802
(71) Applicant: Nikon-Essilor Co., Ltd., Tokyo 130-0026 (JP)
(72) Inventor: CHO Sungjin, Tokyo 130-0026 (JP)
(74) Representative: Viering, Jentschura & Partner mbB Patent- und Rechtsanwälte
(86) International application number: PCT/JP2024/043102
(87) International publication number: WO 2025/134797

(57) **Abstract**

A progressive refractive power lens includes a long-distance part suitable for far vision, a near-distance part disposed at a different position from the long-distance part and having refractive power suitable for near vision, and a progressive part having refractive power that changes continuously between the long-distance part and the near-distance part, a virtual distance position is provided within a range above an eye point and below the long-distance part, and add power at the virtual distance position is corrected based on an add power ratio at a position of the eye point.

## Description

### TECHNICAL FIELD

The present invention relates to a progressive refractive power lens, and a design method for a progressive refractive power lens.

Priority is claimed on Japanese Patent Application No. 2023-214802, filed December 20, 2023, the content of which is incorporated herein by reference.

### BACKGROUND ART

An intermediate-near progressive refractive power lens is a lens that increases add power around an eye point on the lens and widens a range in which an intermediate to near distance can be seen compared to a distance-near progressive refractive power lens. In the intermediate-near progressive refractive power lens, the add power at the eye point is high, so the change in add power is smoothed out by positioning the distance prescription at a distant location at a far upper position.

The lens prescription consists of a prescription for distant locations and an add power based on the prescription for distant locations. For this reason, the location where the prescription for distant location appears is far from the center of the lens and the eye point. As a result, in lens optimization, performance may deteriorate near the center where a frequency of use is high.

### Citation List

### Patent Document

Patent Document 1: Japanese Unexamined Patent Application, First Publication No. 2015-87439

### SUMMARY OF INVENTION

### Solution to Problem

An aspect of the present invention is a progressive refractive power lens including a long-distance part suitable for far vision; a near-distance part disposed at a different position from the long-distance part and having a refractive power suitable for near vision; and a progressive part having a refractive power that changes continuously between the long-distance part and the near-distance part, wherein a virtual distance position is provided within a range above an eye point and below the long-distance part, and add power at the virtual distance position is corrected based on an add power ratio at a position of the eye point.

An aspect of the present invention is a design method for a progressive refractive power lens including a long-distance part suitable for far vision, a near-distance part disposed at a different position from the long-distance part and having refractive power suitable for near vision, and a progressive part having refractive power that changes continuously between the long-distance part and the near-distance part, the design method including: acquiring an add power of a distance prescription of a wearer; acquiring an add power ratio at a position of an eye point; and correcting the add power at a virtual distance position provided within a range above the eye point and below the long-distance part based on the add power ratio at the position of the eye point.

### BRIEF DESCRIPTION OF DRAWINGS

[FIG. 1] A view showing an example of a progressive refractive power lens according to an embodiment.
[FIG. 2] A view showing an example of an add power curve of the progressive refractive power lens according to the embodiment.
[FIG. 3] A view showing an example of add power at a virtual distance position according to the embodiment.
[FIG. 4] A view showing an example of a contour map of residual aberration according to the embodiment.
[FIG. 5] A view showing an example of the add power curve when an order-received eye point add power ratio according to the embodiment is 15%.
[FIG. 6] A view showing an example of the add power curve when the order-received eye point add power ratio according to the embodiment is 25%.
[FIG. 7] A view showing an example of the add power curve when the order-received eye point add power ratio according to the embodiment is 40%.
[FIG. 8] A flowchart showing an example of a design method and a manufacturing method for a progressive refractive power lens according to the embodiment.
[FIG. 9] A view showing an example of a distance-near progressive refractive power lens according to the related art.
[FIG. 10] A view showing an example of an add power curve of the distance-near progressive refractive power lens according to the related art.
[FIG. 11] A view showing an example of an intermediate and near-vision progressive refractive power lens according to the related art.
[FIG. 12] A view showing an example of an add power curve of the intermediate and near-vision progressive refractive power lens according to the related art.
[FIG. 13] A view showing an example of a contour map of residual aberration of the intermediate and near-vision progressive refractive power lens according to the related art.

### DESCRIPTION OF EMBODIMENTS

### (Embodiment)

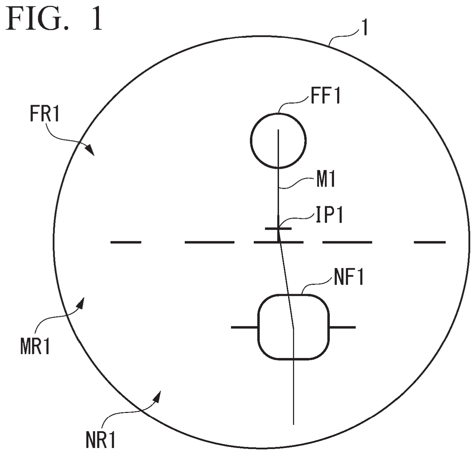

Hereinafter, a first embodiment will be described in detail with reference to the accompanying drawings. FIG. 1 is a view showing an example of a progressive refractive power lens 1 according to the embodiment. In FIG. 1, the progressive refractive power lens 1 is in its state before being processed to match a shape of an eyeglass frame (before a ball grinding process). The progressive refractive power lens 1 is formed in a circular, elliptical, or possibly spherical shape when seen in a plan view. In FIG. 1, the progressive refractive power lens 1 is positioned with its upper side facing upwards during wear and its lower side facing downwards during wear.

The progressive refractive power lens 1 includes a long-distance part FR1, a near-distance part NR1, and a progressive part MR1.

The long-distance part FR1 is disposed at the top of the progressive refractive power lens 1. The long-distance part FR1 becomes a region suitable for far vision after the progressive refractive power lens 1 has been processed for eyeglasses.

The near-distance part NR1 is disposed at the bottom of the progressive refractive power lens 1. The near-distance part NR1 becomes a portion of the progressive refractive power lens 1 that has refractive power corresponding to a near view after it has been processed for use as eyeglasses. That is, the near-distance part NR1 is a region disposed at a different position from the long-distance part FR1 and having refractive power suitable for near vision.

The progressive part MR1 is disposed between the long-distance part FR1 and the near-distance part NR1. The progressive part MR1 is a region where the refractive power changes continuously between the long-distance part FR1 and the near-distance part NR1.

The long-distance part FR1 is disposed on the upper part of the progressive refractive power lens 1, and after the progressive refractive power lens 1 is processed for eyeglasses, it becomes a portion with refractive power corresponding to distant views. The near-distance part NR1 is disposed at the bottom of the progressive refractive power lens 1, and after the progressive refractive power lens 1 is processed for eyeglasses, it becomes a portion having refractive power corresponding to near view. The progressive part MR1 is a portion that connects between the long-distance part FR1 and the near-distance part NR1 by continuously and smoothly changing the refractive power therebetween.

A principal meridian M1 is provided near the center of the progressive refractive power lens 1. The principal meridian M1 is a virtual line on the lens through which the gaze passes when a wearer views an object from directly above to directly below, and due to convergence associated with near-field reactions, it shifts inward as the object approaches a near point.

The progressive refractive power lens 1 has a plurality of reference points on the principal meridian M1. The reference points provided in the progressive refractive power lens 1 include, for example, a virtual distance position FF1, an eye point IP1, and a near measurement position NF1. The virtual distance position FF1, the eye point IP1, and the near measurement position NF1 are disposed in this order, from top to bottom on the principal meridian M1.

The eye point IP1 serves as the reference point when the wearer puts on the progressive refractive power lens 1.

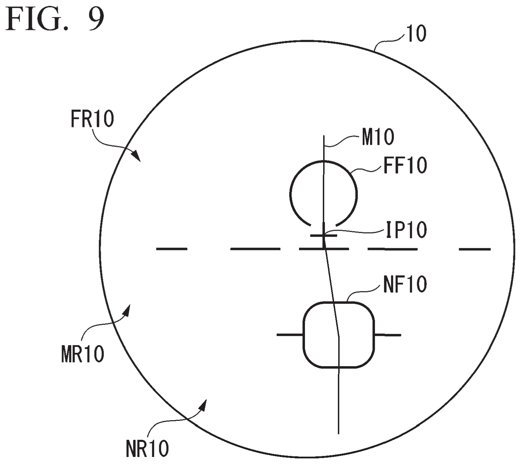

The virtual distance position FF1 is the same position as the distance measurement position of the distance-near progressive refractive power lens. Here, the distance measurement position of the distance-near progressive refractive power lens according to the related art will be described with reference to FIG. 9.

FIG. 9 is a view showing an example of a distance-near progressive refractive power lens 10 according to the related art. The distance-near progressive refractive power lens 10 includes a long-distance part FR10, a near-distance part NR10, and a progressive part MR10. A principal meridian M10 is provided approximately in the center of the distance-near progressive refractive power lens 10. The progressive refractive power lens 1 has a plurality of reference points on the principal meridian M10. The reference points of the distance-near progressive refractive power lens 10 include a distance measurement position FF10, an eye point IP10, and a near measurement position NF10. The distance measurement position FF10, the eye point IP10, and the near measurement position NF10 are disposed from top to bottom in this order within the principal meridian M10.

The distance-near progressive refractive power lens 10 is a lens that can focus from infinity to near working distance. In the distance-near progressive refractive power lens 10, the prescription location where focus is achieved at infinity is not the eye point IP10, but the distance measurement position FF10, which is located above the eye point IP10. In the distance-near progressive refractive power lens 10, for example, the distance measurement position FF10 is located in a range of 4 mm to 8 mm above the eye point IP10.

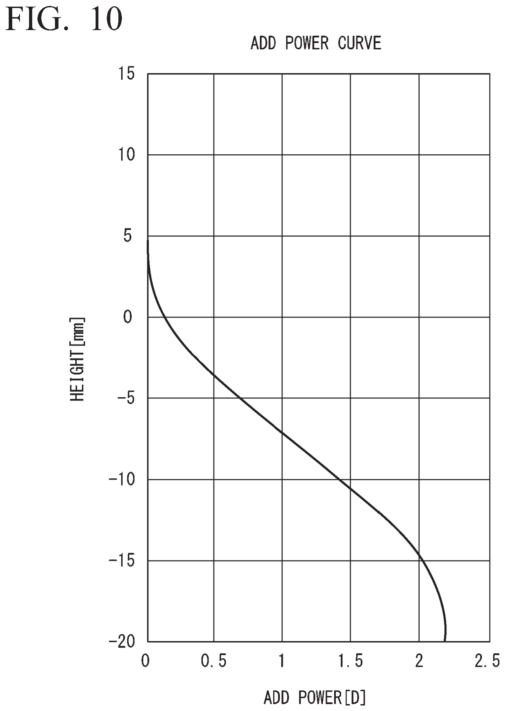

The add power of the distance-near progressive refractive power lens 10 is, for example, 2.00 diopters. FIG. 10 shows an add power curve of the distance-near progressive refractive power lens 10. As shown in FIG. 10, in the distance-near progressive refractive power lens 10, the add power in the long-distance part FR10 is zero.

Returning to FIG. 1, the description of the progressive refractive power lens 1 will be continued.

The virtual distance position FF1 is, for example, the same position as the distance measurement position FF10 of the distance-near progressive refractive power lens 10 according to the above-mentioned related art.

In addition, as an example, the virtual distance position FF1 is located in a range of 4 mm to 8 mm above the eye point IP1. Here, the distance measurement position of the distance-near progressive refractive power lens is above the eye point IP1 and falls within the range below the long-distance part FR1. In addition, the range of 4 mm to 8 mm above the eye point IP1 is included in the range above the eye point IP1 and below the long-distance part FR1. Accordingly, in the progressive refractive power lens 1, the virtual distance position FF1 is located in a range above the eye point IP1 and below the long-distance part FR1.

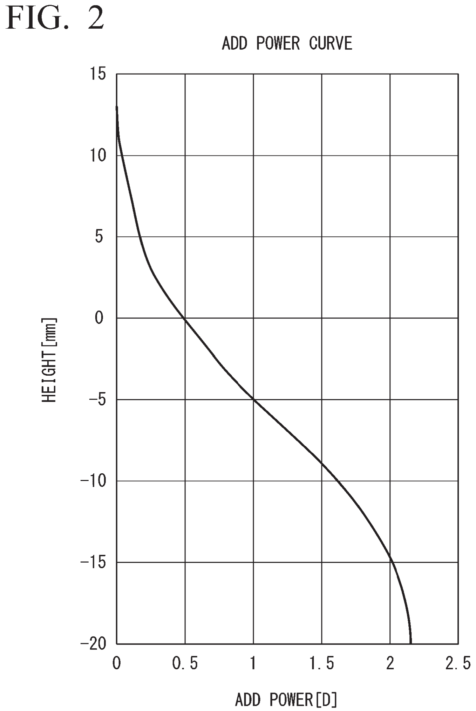

Next, the add power curve of the progressive refractive power lens 1 will be described with reference to FIG. 2. FIG. 2 is a view showing an example of the add power curve of the progressive refractive power lens 1 according to the embodiment. The "height" in FIG. 2 shows the height in the upward/downward direction of the progressive refractive power lens 1 with reference to the eye point IP1 of the progressive refractive power lens 1. Here, the height corresponding to the eye point IP1 is 0 mm. Hereinafter, the height in the upward/downward direction of the progressive refractive power lens 1 may be simply referred to as the height of the progressive refractive power lens 1.

Here, when the wearer's distant prescription is spherical prescription power Sph0, astigmatism prescription power Cyl0, an astigmatism axis Ax0, and prescription add power Add0, Xep(%) is set to an eye point add power ratio (also written as an order-received eye point add power ratio) of the progressive refractive power lens 1 to be ordered. The eye point add power ratio Xep has values ranging from 0% to 50%. For example, if Xep = 25%, the prescription add power Add0 = 2.50 D, and then, the add power at eye point IP1 will be 2.50 x 0.25 = 0.625D.

The eye point add power ratio Xep can be determined by the product, and it is also possible to directly input, when ordering glasses lens, the value calculated based on the distance the wearer wants to see in a front view, or based on lifestyle habits.

For the prescription of the ordered lens, the power of the progressive refractive power lens 1 at the virtual distance position FF1 is defined as virtual distance spherical power Sph1, virtual distance astigmatism power Cyl1, and a virtual distance astigmatism axis Ax1. The relationships of the virtual distance spherical power Sph1, the virtual distance astigmatism power Cyl1, and the virtual distance astigmatism axis Ax1, with respect to the spherical prescription power Sph0, the astigmatism prescription power Cyl0, and the astigmatism axis Ax0 of the wearer's distant prescription, are shown in Equations (1), (2), and (3), respectively.

[Math. 1] $Sph 1 = Sph 0 + Add 1$ (1)

[Math. 2] $Cyl 1 = Cyl 0$ (2)

[Math. 3] $Ax 1 = Ax 0$ (3)

As shown in Equation (1), the virtual distance spherical power Sph1 is increased by plus power Add1, while the virtual distance astigmatism power Cyl1 and the virtual distance astigmatism axis Ax1 maintain the same values as the prescription power, as shown in Equations (2) and (3).. The plus power Add1 is shown in Equation (4).

[Math. 4] $Add 1 = Add 0 \times \left(Xep-X0\right) / \left(50-X0\right) \times a$ (4)

A value of an add power ratio X0 is in a range of 10% to 20%. The add power ratio X0 is determined by the design boundaries of the distance-near progressive refractive power lens and the intermediate and near-vision progressive refractive power lens. The add power ratio X0 represents the maximum add power ratio at which infinity is visible at the distance position. That is, the add power ratio X0 represents the maximum add power ratio in the distance-near progressive refractive power lens. Further, if the value of the eye point add power ratio Xep is less than the value of the add power ratio X0, then in Equation (4), the value of the plus power Add1 is considered to be 0.

A value of a parameter α is in the range of 0.15 to 0.25. The parameter α is a parameter used to determine the ratio of the add power at the virtual distance position FF1. The parameter α is set so that the add power at the virtual distance position FF1 is the same as that of the intermediate and near-vision progressive refractive power lens, ensuring a seamless transition when switching from the existing intermediate and near-vision progressive refractive power lens.

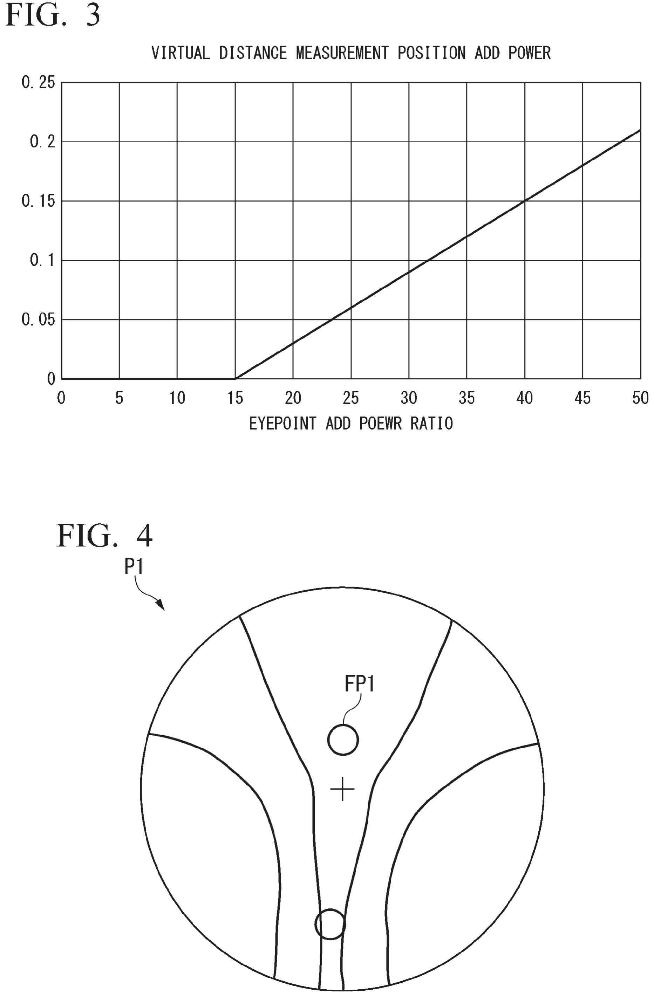

According to Equation (1), in the progressive refractive power lens 1, the add power at the virtual distance position FF1 is corrected based on the eye point add power ratio Xep at the position of the eye point IP1. FIG. 3 shows add power at the virtual distance position FF1. FIG. 3 shows the add power at the virtual distance position FF1 relative to the eye point add power ratio Xep at the position of the eye point IP1.

As described above, in the progressive refractive power lens 1, the virtual distance position FF1 is located in a range above the eye point IP1 and below the long-distance part FR1. In the progressive refractive power lens 1, the change in add power is less than or equal to a predetermined magnitude in the range where the virtual distance position FF1 is provided. The value of the predetermined magnitude can be set to, for example, +/-0.12D (diopter) or less.

In the progressive refractive power lens 1, as shown in a graph of the add power curve in FIG. 2, the power of the progressive refractive power lens 1 is made to remain as constant as possible with respect to the change in height at the virtual distance position FF1. In other words, to make the power as constant as possible with respect to changes in height means making the graph of the add power curve, where the horizontal axis is add power and the vertical axis is height, as perpendicular as possible to the horizontal axis at the virtual distance position FF1. By stabilizing the add power in the virtual distance position FF1 with respect to the height changes, the region in which the perceived distance of the add power appears stable widens, improving wearing comfort.

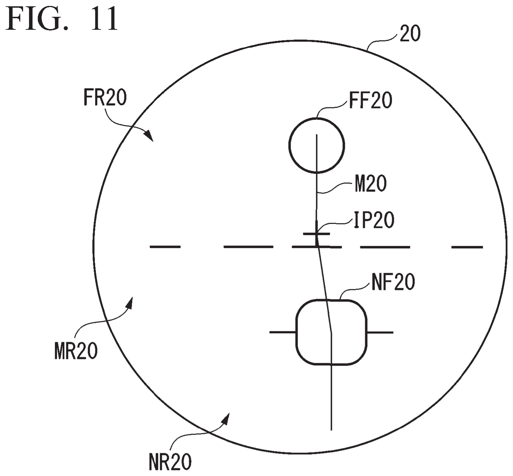

For comparison with the progressive refractive power lens 1 according to the embodiment, an intermediate and near-vision progressive refractive power lens 20 according to the related art will be described. FIG. 11 is a view showing an example of the intermediate and near-vision progressive refractive power lens 20 according to the related art.

The intermediate and near-vision progressive refractive power lens 20 includes a long-distance part FR20, a near-distance part NR20, and a progressive part MR20. A principal meridian M20 is provided approximately in the center of the intermediate and near-vision progressive refractive power lens 20. The intermediate and near-vision progressive refractive power lens 20 has a plurality of reference points on the principal meridian M20. The reference points of the intermediate and near-vision progressive refractive power lens 20 include a distance measurement position FF20, an eye point IP20, and a near measurement position NF20. The distance measurement position FF20, the eye point IP20, and the near measurement position NF20 are disposed from top to bottom in this order within the principal meridian M20.

In the intermediate and near-vision progressive refractive power lens 20 according to the related art, the distance measurement position FF20 is located above the distance-near progressive refractive power lens 10 (see FIG. 9), and is determined by the add power at the eye point IP20. For this reason, it is difficult to directly compare the intermediate and near-vision progressive refractive power lens 20 with a perspective progressive lens (for example, the distance-near progressive refractive power lens 10) in terms of the visible range for distance vision.

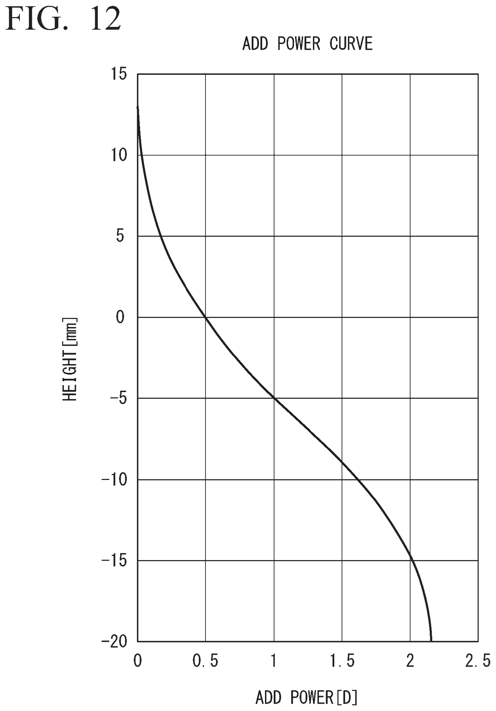

The add power of the intermediate and near-vision progressive refractive power lens 20 is 2.00 diopters, and the add power ratio at the eye point IP20 is 25%. FIG. 12 shows the add power curve for the intermediate and near-vision progressive refractive power lens 20. As shown in FIG. 12, in the intermediate and near-vision progressive refractive power lens 20, the change in add power in the range of 4 mm to 8 mm above the eye point IP20 is larger than the change in add power of the progressive refractive power lens 1 according to the embodiment (FIG. 2).

Further, in the progressive refractive power lens 1, a position where the equivalent sphere power is equal to the equivalent sphere power of distant prescription is provided above the virtual distance position FF1. Accordingly, the wearer of the progressive refractive power lens 1 can see further than the distance set by the virtual distance position FF1.

Next, residual aberration of the progressive refractive power lens 1 will be described.

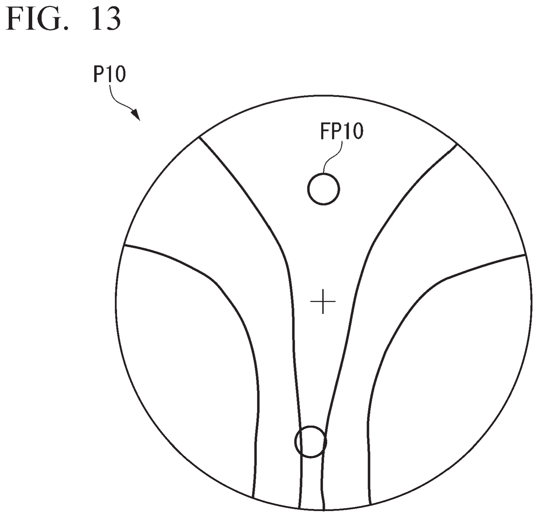

Before describing the residual aberration of the progressive refractive power lens 1, for comparison, the residual aberration of the intermediate and near-vision progressive refractive power lens 20 according to the related art will be described. FIG. 13 is a view showing an example of a contour map P10 of the residual aberration of the intermediate and near-vision progressive refractive power lens 20 according to the related art. The upward/downward direction of the contour map P10 in FIG. 13 coincides with the upward/downward direction of FIG. 11. An optimization reference position FP10 in the contour map P10 corresponds to the distance measurement position FF20 shown in FIG. 11.

In the intermediate and near-vision progressive refractive power lens 20 according to the related art, optimization is performed based on the distance vision power relative to the distance measurement position FF20. In the intermediate and near-vision progressive refractive power lens 20, residual aberration remains even after optimization, and this residual aberration is particularly large in prescriptions for severe myopia or severe hyperopia. Residual aberration tends to increase as the position moves away from the optimization criteria. For this reason, when optimizing the intermediate and near-vision progressive refractive power lens 20 at the distance measurement position FF20 according to the related art, residual aberration near the center of the lens, where frequency of use is high, may increase.

FIG. 4 is a view showing an example of a contour map P1 of the residual aberration according to the embodiment. The upward/downward direction of the contour map P1 in FIG. 4 coincides with the upward/downward direction of FIG. 1. An optimization reference position FP1 in the contour map P1 corresponds to the virtual distance position FF1 shown in FIG. 1.

As described above, in the progressive refractive power lens 1 according to the embodiment, the reference position for optimization is the virtual distance position FF1. The virtual distance position FF1 is closer to the eye point IP1 compared to the existing distance measurement position. For this reason, the progressive refractive power lens 1 can suppress residual aberration in regions with high frequency of use.

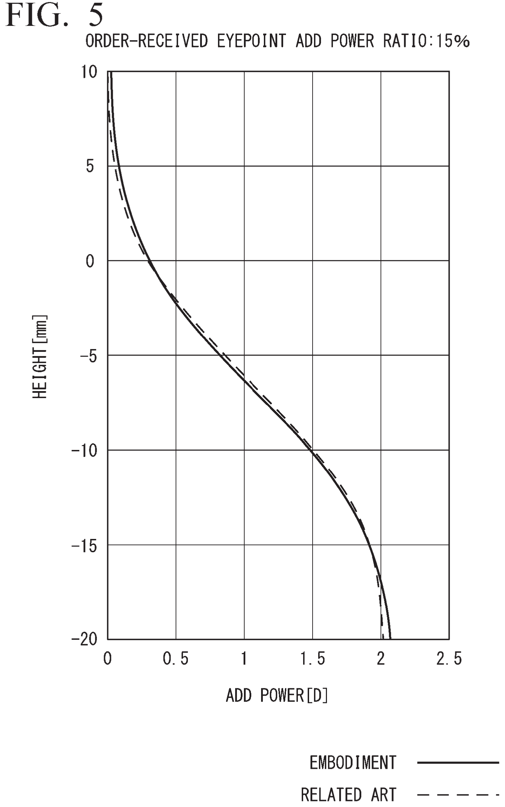

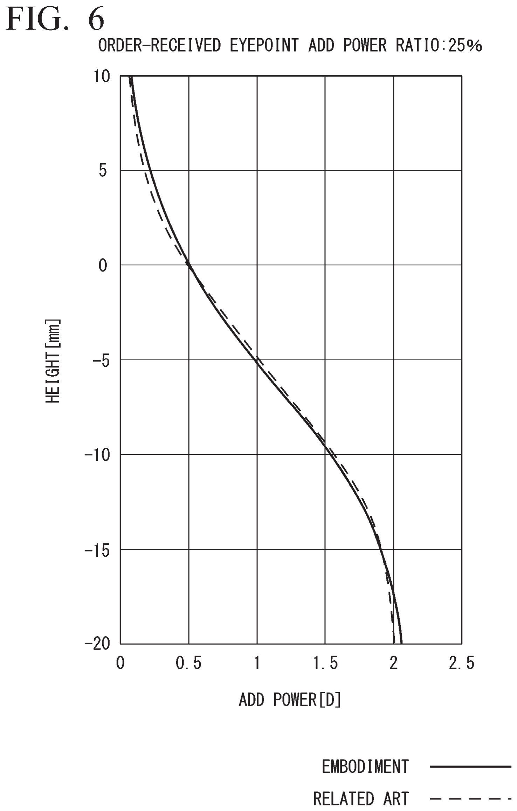

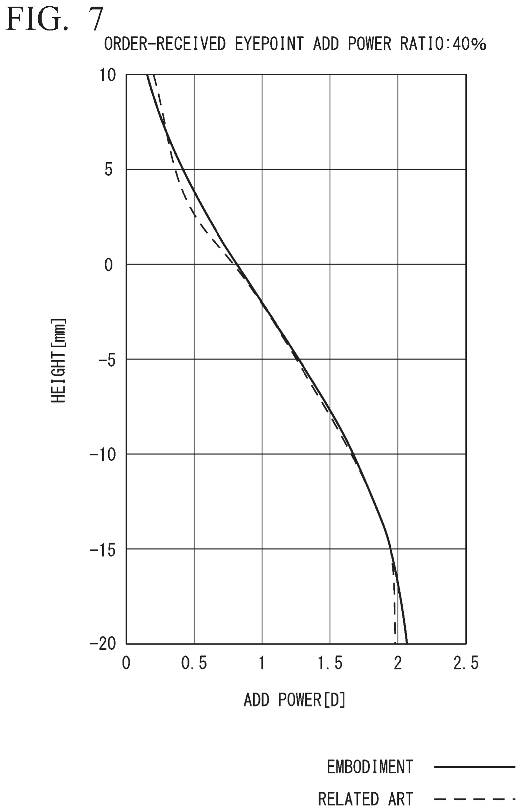

Referring to FIG. 5 to FIG. 7, an example of an add power curve for each order-received eye point add power ratio is shown. FIG. 5, FIG. 6, and FIG. 7 are views showing examples of add power curves for order-received eye point add power ratios of 15%, 25%, and 40%, respectively. In FIG. 5, FIG. 6, and FIG. 7, the add power curves of the intermediate and near-vision progressive refractive power lens 20 according to the related art are superimposed for comparison with the progressive refractive power lens 1 according to the embodiment. In the height range of approximately 0 mm to 6 mm, the add power curve of the progressive refractive power lens 1 is a downward-convex curve and is located below the add power curve of the intermediate and near-vision progressive refractive power lens 20. Accordingly, in the range where the virtual distance position FF1 is provided, the change in add power is kept below the predetermined magnitude.

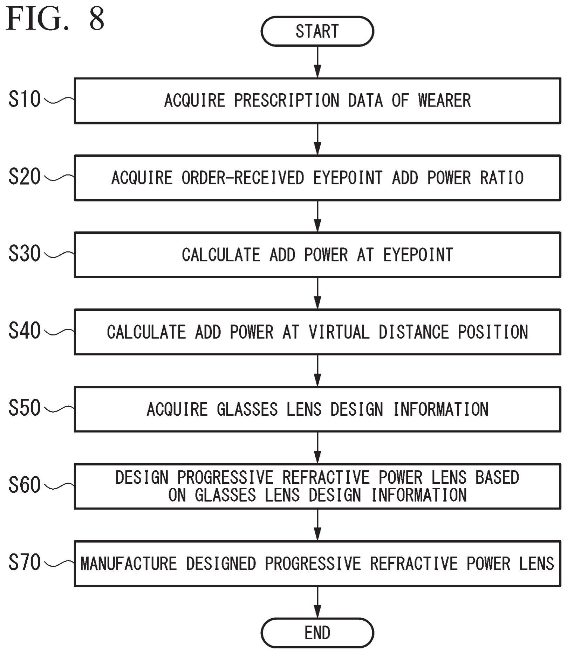

Next, referring to FIG. 8, a design method and a manufacturing method for the progressive refractive power lens 1 will be described. FIG. 8 is a flowchart showing an example of the design method and the manufacturing method for the progressive refractive power lens 1 according to the embodiment. The design method shown in FIG. 8 is executed by a computing device 2 (not shown). The manufacturing method shown in FIG. 8 is executed by design equipment 3 (not shown). The computing device 2 is a computing device that calculates numerical values relating to the optical properties of the progressive refractive power lens 1 based on information about the progressive refractive power lens 1 obtained from input or communication from the user of the computing device 2. Here, the user of the computing device 2 (hereinafter simply referred to as a user) refers to a person who operates the computing device 2, including, for example, a customer who visits an eyeglass store, such as a wearer of glasses lens, and an employee of the eyeglass store.

Step S10: The computing device 2 obtains the wearer's prescription data. The prescription data includes the wearer's distant prescription, specifically the spherical prescription power Sph0, the astigmatism prescription power Cyl0, the astigmatism axis Ax0, and the prescription add power Add0. Accordingly, the computing device 2 obtains add power of distant prescription of the wearer.

Step S20: The computing device 2 obtains the eye point add power ratio Xep at the eye point IP1. Here, the computing device 2 calculates the eye point add power ratio Xep based on a value calculated by, for example, the distance the wearer wants to see in a front view, or lifestyle habits. Further, the computing device 2 may obtain the eye point add power ratio Xep, which is input by the user from the input device.

Step S30: The computing device 2 calculates the add power at the eye point IP1. The computing device 2 calculates the add power at the eye point IP1 by multiplying the add power included in the prescription data by the eye point add power ratio Xep.

Step S40: The computing device 2 calculates the add power at the virtual distance position FF1. Here, the computing device 2 calculates the virtual distance spherical power Sph1 at the virtual distance position FF1 by correcting it from the prescription power based on the eye point add power ratio Xep. The computing device 2 corrects the virtual distance spherical power Sph1 based, for example, on the equation (1) described above. Accordingly, the computing device 2 corrects the add power at the virtual distance position FF1, which is located above the eye point IP1 and below the long-distance part FR1, based on the add power ratio at the eye point IP1 (the eye point add power ratio Xep).

The computing device 2 calculates the same value for the virtual distance astigmatism power Cyl1 and the virtual distance astigmatism axis Ax1 as for the prescription power.

Step S50: The design equipment 3 acquires glasses lens design information. Here, the glasses lens design information includes information about the virtual distance spherical power Sph1, the virtual distance astigmatism power Cyl1, and the virtual distance astigmatism axis Ax1, which are calculated at the virtual distance position FF1, the add power at the near measurement position NF1, the add power at the eye point IP1, the frame, and the like. The glasses lens design information is transmitted, for example, from the eyeglass store to the design equipment 3 via a glasses lens ordering device and a glasses lens order-received device (not shown).

Step S60: Based on the acquired glasses lens design information, the design equipment 3 designs each part of the progressive refractive power lens 1 so that the refractive power is continuously connected thereto.

Step S70: The glasses lens processing equipment (not shown) manufactures the designed progressive refractive power lens 1.

Hereinabove, the design method and the manufacturing method for the progressive refractive power lens 1 are now completed.

As described above, the progressive refractive power lens 1 according to the embodiment includes the long-distance part FR1 suitable for far vision, the near-distance part NR1 disposed at a different position from the long-distance part FR1 and having refractive power suitable for near vision, and the progressive part MR1 in which the refractive power changes continuously between the long-distance part FR1 and the near-distance part NR1. In the progressive refractive power lens 1 according to the embodiment, the virtual distance position FF1 is located in a range above the eye point IP1 and below the long-distance part FR1, and the add power at the virtual distance position FF1 is corrected based on the add power ratio at the eye point IP1 (in this embodiment, the eye point add power ratio Xep).

This configuration allows the progressive refractive power lens 1 of the embodiment to directly compare the distance visible at the long-distance part FR1 with the add power at the virtual distance position FF1, making it easier for the wearer to understand when deciding on the design type of glasses lens. The design type is the add power ratio of the eye point.

Further, a program for realizing the function of any component in any of the devices described above may be recorded on a computer-readable recording medium, and the program may be loaded into a computer system and executed. Further, the term "computer system" as used herein includes the operating system and hardware such as peripheral devices. In addition, the "computer-readable recording medium" refers to a portable medium such as a flexible disk, magneto-optical disk, ROM, and compact disc (CD) - read-only memory (ROM), as well as a storage device such as a hard disk built into the computer system. Further, the "computer-readable recording medium" includes a volatile memory within the computer system that retains programs for a certain period of time, such as the memory of a server or client when a program is transmitted via a network such as the Internet or a communication line such as a telephone line. The volatile memory may be, for example, a random access memory (RAM). The recording medium may be, for example, a non-temporary recording medium.

In addition, the above-mentioned program may be transmitted from a computer system that stores this program in a memory device or the like to another computer system via a transmission medium, or by transmission waves within the transmission medium. Here, the "transmission medium" for transmitting a program refers to a medium that has a function of transmitting information, such as a network such as the Internet or a communication line such as a telephone line.

In addition, the above-mentioned program may be intended to implement some of the functions described above. Further, the program described above may be a so-called differential file, which can achieve the aforementioned functions in combination with programs already recorded in the computer system. The differential file may also be called a differential program.

In addition, the functions of any component in any device described above may be implemented by a processor. For example, each process in this embodiment may be implemented by a processor that operates based on information such as a program, and a computer-readable recording medium that stores information such as a program. Here, the processor may, for example, have its functions implemented by separate hardware components, or it may have its functions implemented by a single piece of hardware. For example, the processor includes hardware, which may include at least one of circuits for processing digital signals and circuits for processing analog signals. For example, the processor may be configured using one or a plurality of circuit devices, or one or a plurality of circuit elements, mounted on a circuit board. The integrated circuit (IC) may be used as the circuit device, and resistors or capacitors may be used as the circuit elements.

Here, the processor may be, for example, a CPU. However, the processor is not limited to the CPU; various other processors may be used, such as a graphics processing unit (GPU) or a digital signal processor (DSP). In addition, the processor may be, for example, a hardware circuit using an application-specific integrated circuit (ASIC). In addition, the processor may be constituted by, for example, a plurality of CPUs, or a hardware circuit constituted by a plurality of ASICs. In addition, the processor may be constituted by, for example, a combination of a plurality of CPUs and a hardware circuit constituted by a plurality of ASICs. In addition, the processor may include, for example, one or more amplifier circuits or filter circuits that process analog signals.

Hereinabove, while the embodiment of the present invention has been described in detail with reference to the accompanying drawings, the specific configuration is not limited to those described above, and various design changes can be made without departing from the scope of the present invention.

### REFERENCE SIGNS LIST

1 Progressive refractive power lens
FR1 Long-distance part
NR1 Near-distance part
MRI Progressive part
FF1 Virtual distance position
IP1 Eye point
NF1 Near measurement position

## Claims

1. A progressive refractive power lens comprising:
a long-distance part suitable for far vision;
a near-distance part disposed at a different position from the long-distance part and having refractive power suitable for near vision; and
a progressive part having refractive power that changes continuously between the long-distance part and the near-distance part,
wherein a virtual distance position is provided within a range above an eye point and below the long-distance part, and
add power at the virtual distance position is corrected based on an add power ratio at a position of the eye point.

2. The progressive refractive power lens according to claim 1, wherein changes in add power in the range are equal to or less than a predetermined magnitude.

3. The progressive refractive power lens according to claim 1, wherein the virtual distance position is provided within a range of 4 mm to 8 mm above the eye point.

4. The progressive refractive power lens according to claim 1, wherein the virtual distance position is the same position as a distance measurement position of a distance-near progressive refractive power lens.

5. The progressive refractive power lens according to claim 1, wherein a position where equivalent sphere power is equal to equivalent sphere power of distant prescription is provided above the virtual distance position.

6. A design method for a progressive refractive power lens comprising a long-distance part suitable for far vision, a near-distance part disposed at a different position from the long-distance part and having refractive power suitable for near vision, and a progressive part having refractive power that changes continuously between the long-distance part and the near-distance part, the design method comprising:
acquiring add power of distant prescription of a wearer;
acquiring an add power ratio at a position of an eye point; and
correcting the add power at a virtual distance position provided within a range above the eye point and below the long-distance part based on the add power ratio at the position of the eye point.
